# FASCICULE DE BREVET EUROPEEN

(11) **EP 1 697 237 B1**
(45) Date de publication et mention de la délivrance du brevet: **25.04.2007**
(21) Numéro de dépôt: 04820615.5
(22) Date de dépôt: 17.12.2004
(51) Int. Cl.: B65G 47/256

(54) **SYSTEME D'ALIMENTATION DE PREFORMES, NOTAMMENT D'UNE MACHINE DE SOUFFLAGE DE RECIPIENTS, COMPORTANT DES MOYENS D'EJECTION DES PREFORMES MAL POSITIONNEES**
ZUFÜHRSYSTEM FÜR VORFORMLINGE, INSBESONDERE EINER BEHÄLTERBLASFORMMASCHINE, DIE MITTEL ZUM AUSSTOSSEN VON SCHLECHT POSITIONIERTEN VORFORMLINGEN UMFASST
PREFORM FEEDER SYSTEM, PARTICULARLY OF A RECEPTACLE BLOWING MACHINE COMPRISING MEANS FOR EJECTING BADLY POSITIONED PREFORMS

(30) Priorité: 23.12.2003 FR 0351173
(43) Date de publication de la demande: 06.09.2006
(73) Titulaire: SIDEL PARTICIPATIONS, 76930 Octeville-sur-Mer (FR)
(72) Inventeur: CHARPENTIER, Alain, SIDEL PARTICIPATIONS, F-76930 Octeville-sur-Mer (FR)
(74) Mandataire: Kohn, Philippe
(86) Numéro de dépôt international: PCT/EP2004/053559
(87) Numéro de publication internationale: WO 2005/061352

(56) Documents cités:
- WO-A-02/36466
- US-A- 1 803 993
- US-B1- 6 575 305

## Description

L'invention concerne un système d'alimentation de préformes, notamment d'une machine de soufflage de récipients, comportant des moyens d'éjection des préformes mal positionnées.

Le système d'alimentation sera plus particulièrement décrit dans le cadre de sa mise en oeuvre dans une installation de soufflage ou d'étirage-soufflage de préformes en PET (polyéthylène téréphtalate) pour la fabrication de récipients, notamment de récipients creux tels que des bouteilles ou des flacons.

En effet, selon une technique connue, de tels récipients sont généralement produits en deux étapes.

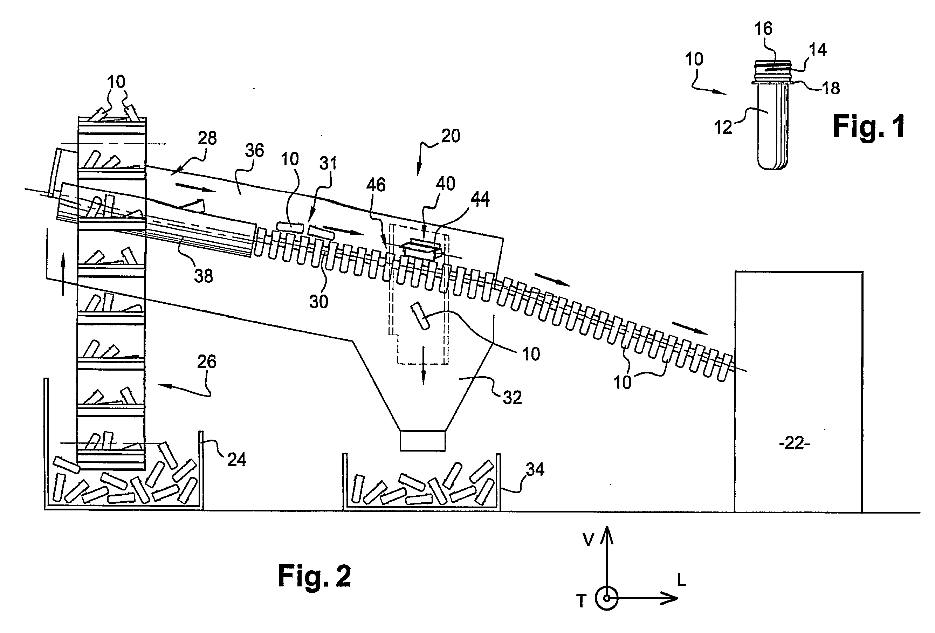

Dans une première étape, on procède au moulage par injection d'une préforme en PET, par exemple du type de celle qui est illustrée à la figure 1 et dans une deuxième étape, on procède directement ou indirectement au soufflage de la préforme.

Une telle préforme 10 comporte un corps 12 sensiblement tubulaire qui est fermé à l'une de ses extrémités axiales et présente à son autre extrémité un col 14 qui a, dès cette opération de moulage par injection, la forme définitive du col du récipient final.

Le col 14 de la préforme 10 comporte un filetage 16 et une collerette 18 annulaire de support qui s'étend, à la base du col, radialement vers l'extérieur.

II existe des agencements dans lesquels les préformes, une fois injectées, sont directement transmises vers la machine de soufflage, le transport des préformes étant effectué de manière positive, c'est-à-dire dire que chaque préforme est prise en charge individuellement.

Toutefois, dans de nombreux cas, les préformes sont fabriquées par injection à l'aide d'une première machine et sont moulées par soufflage à la forme définitive du récipient à l'aide d'une seconde une machine de soufflage spécifique. Une telle technologie permet par exemple de procéder à l'opération de moulage par soufflage le plus près possible du lieu d'embouteillage, l'opération d'injection pouvant être effectuée en n'importe quel autre endroit.

Dans de tels cas où la machine d'injection et la machine de soufflage sont deux machines totalement indépendantes, l'installation comportant la machine de soufflage dispose alors généralement d'un système d'alimentation de préformes destiné à convoyer les préformes 10 vers la machine.

Un tel système d'alimentation de préformes est par exemple décrit dans le document WO-A-02/36466 de l'état de la technique.

Dans ce document, la figure 1 notamment représente de manière schématique un système d'alimentation de préformes de type conventionnel destiné à alimenter une machine de soufflage de récipients.

Par conséquent, on procédera ci-après à une description générale d'un tel système d'alimentation de préformes et plus particulièrement à celle des moyens connus d'éjection des préformes mal positionnées lesquels bien que couramment utilisés ne donnent pas entièrement satisfaction.

Dans un tel système, les préformes sont le plus souvent déversées en vrac dans un bac, en forme de trémie, du système d'alimentation.

Les préformes sont prélevées de ce bac par un tapis élévateur qui, à son tour, vient déverser les préformes, selon un rythme pré-établi, à l'extrémité supérieure d'un dispositif de démêlage et d'alignement. Ce dispositif comporte généralement deux rouleaux d'alignement qui sont inclinés par rapport à l'horizontale et qui sont sensiblement parallèles l'un à l'autre. Les deux rouleaux sont entraînés en rotation selon des sens opposés, et sont écartés l'un de l'autre de manière à laisser subsister entre les deux rouleaux un intervalle, le long des deux rouleaux, qui est de dimension légèrement supérieure à la dimension du corps des préformes. Au contraire, l'écartement des deux rouleaux d'alignement est tel que l'espace transversal entre les deux rouleaux est inférieur à la dimension de la collerette de support située à la base du col de la préforme.

Le dispositif de démêlage et d'alignement est configuré de telle manière que, sous l'effet de la gravité, les préformes sont forcées vers les deux rouleaux. Ainsi, par simple gravité, chaque préforme tend à se disposer entre les deux rouleaux, de manière à être retenue en appui par sa collerette sur les rouleaux tout en ayant le corps pendant vers le bas entre les deux rouleaux. Le mouvement de rotation des rouleaux et leur inclinaison assure d'une part le placement des préformes les unes derrière les autres, dans la position préférentielle décrite plus haut, et d'autre part le glissement des préformes le long de l'axe longitudinal des rouleaux, vers le bas du dispositif de démêlage et d'alignement où elles sont récupérées dans un rail d'alimentation lui-même relié par exemple à la machine de soufflage. Dans le rail d'alimentation, les préformes s'accumulent ainsi de préférence en une file continue.

Toutefois, du fait que les préformes sont déversées en vrac dans le dispositif de démêlage et d'alignement, et du fait du caractère aléatoire du placement des préformes, certaines d'entre elles arrivent à proximité de la sortie du dispositif de démêlage et d'alignement (donc à proximité du rail d'alimentation) sans avoir pu se positionner correctement entre les deux rouleaux. Des essais ont notamment permis d'identifier des configurations de positionnement incorrectes des préformes bien déterminées, notamment dans les rouleaux d'alignement.

II s'agit plus particulièrement des préformes dites « couchées », c'est-à-dire de préformes qui ne sont pas correctement orientées verticalement par opposition aux préformes dite « debout » s'étendant verticalement le col en haut dans les rouleaux, c'est-à-dire celles qui sont retenues en appui par leur collerette sur les rouleaux tout en ayant leur corps pendant vers le bas entre les deux rouleaux.

Il en est de même du cas particulier d'au moins deux préformes emboîtées l'une dans l'autre, qui peuvent être soit de type « couchées », soit de type « debout » c'est-à-dire le cas dans lequel une préforme est emboîtée dans une autre préforme inférieure correctement orientée.

Bien entendu, de telles préformes mal positionnées ne peuvent pas être introduites dans le rail d'alimentation et ne doivent en aucun cas être conduites ou convoyées vers la machine. C'est la raison pour laquelle les systèmes d'alimentation de préformes comportent généralement des moyens destinés à traiter ces préformes mal positionnées.

De tels moyens sont par exemple constitués par une roue de refoulement qui est munie de pales et est agencée au voisinage de l'extrémité inférieure du dispositif de démêlage et d'alignement. Cette roue est rotative autour d'un axe perpendiculaire à l'axe des rouleaux d'alignement et les pales de cette roue de refoulement sont destinées à balayer l'espace du dispositif de démêlage et d'alignement situé au-dessus des rouleaux de manière à repousser vers l'amont selon le sens de défilement des préformes, toute préforme qui ne serait pas correctement positionnée entre les rouleaux.

Le principe de cette roue de refoulement est que, de manière statistique, les préformes parviennent à se positionner correctement après un certain nombre de refoulements.

Toutefois, lorsqu'il s'agit d'alimenter des machines à très hautes cadences, par exemple des machines capables de souffler plus de 40.000 récipients par heure, les systèmes de démêlage et d'alignement classiques présentent parfois des dysfonctionnements, surtout lorsque les préformes présentent un col de diamètre important.

Dans ce cas, étant donné la vitesse de défilement des préformes dans le dispositif de démêlage et d'alignement, il arrive que les préformes refoulées vers l'amont par la roue de refoulement ne parviennent jamais à se positionner correctement entre les rouleaux.

Afin d'améliorer le traitement des préformes mal positionnées dans les systèmes d'alimentation, le document WO-A-02/36466 propose de modifier le principe d'utilisation de la roue afin de non plus refouler les préformes mal positionnées vers les rouleaux d'alignement, mais de les éjecter hors du système d'alimentation.

Cependant, l'éjection des préformes mal positionnées avec une telle roue ne donne pas satisfaction dans tous les cas et n'est donc pas totalement fiable.

En effet, il arrive que certaines préformes mal positionnées soient quand même refoulées par la roue d'éjection vers les rouleaux d'alignement ou ne soient pas éjectées par l'orifice d'éjection. On a déterminé que de tels incidents dépendent notamment de la position dans laquelle se trouve la préforme mal positionnée lorsqu'elle entre en contact avec la roue d'éjection. Or la position de la préforme est totalement aléatoire et imprévisible.

De plus, le positionnement de la roue d'éjection au-dessus des rouleaux d'alignement conduit à amener les préformes mal positionnées au contact des pâles radiales de la roue d'éjection au moment où les préformes ne sont pas encore toutes ordonnées et celles qui ont été correctement positionnées subissent, sous l'action des rouleaux d'alignement, une importante accélération qui contribue à augmenter les risques d'incidents.

Par exemple, dans le cas de deux préformes mal ou pas encore positionnées qui sont proches l'une de l'autre, il existe alors un risque d'interférence entre ces deux préformes lors de l'éjection.

Par conséquent, de tels incidents sont susceptibles d'une manière générale d'occasionner des dommages et des bourrages qui peuvent entraîner des interruptions de la file de préformes convoyées, voire conduire à un arrêt de l'alimentation des préformes, et donc à un arrêt de la machine de soufflage du fait d'un manque de préformes.

Bien entendu, de tels arrêts ne sont pas souhaitables étant donné qu'ils peuvent entraîner l'arrêt de la ligne d'embouteillage située en aval de la machine de soufflage.

L'invention a donc pour but de proposer une nouvelle conception des moyens d'éjection des préformes mal positionnées pour des systèmes d'alimentation de préformes qui permettent d'augmenter encore la fiabilité de tels systèmes, notamment dans le cas de systèmes destinés à être mis en oeuvre dans des installations comportant des machines à hautes cadences.

Dans ce but, l'invention propose un système d'alimentation de préformes, notamment destiné à alimenter des machines de soufflage de récipients tels que des bouteilles, du type comportant d'amont en aval selon la direction longitudinale de défilement des préformes, au moins un dispositif de démêlage et d'alignement dont l'extrémité supérieure est approvisionnée en préformes en vrac et dont l'extrémité inférieure comporte au moins deux rouleaux d'alignement, sensiblement parallèles et entraînés en rotation autour de leur axe respectif, qui sont destinés à positionner les préformes dans des rails d'alimentation, inclinés par rapport à l'horizontale, pour les convoyer vers une machine, et du type comportant au moins une roue d'éjection qui est agencée au-dessus des préformes et entraînée en rotation autour d'un axe qui s'étend globalement transversalement, caractérisé en ce que la roue d'éjection est agencée en aval des rouleaux d'alignement de manière à éjecter des rails d'alimentation les préformes mal positionnées et en ce qu'il comporte des moyens de soulèvement des préformes mal positionnées de type couchées qui s'étendent notamment globalement transversalement par rapport aux rails d'alimentation, de manière à provoquer leur éjection par la roue d'éjection agencée en aval.

Grâce au positionnement de la roue d'éjection en aval des rouleaux d'alignement, l'opération d'éjection des préformes mal positionnées est effectuée sur des préformes bien ordonnées selon une file sensiblement continue se déplaçant à une vitesse globalement constante dans un tronçon rectiligne de stabilisation des rails d'alimentation.

Avantageusement, on élimine ainsi les risques de refoulement vers les rouleaux, d'interférences et par conséquent de bourrages susceptibles de provoquer des arrêts de production.

Selon d'autres caractéristiques de l'invention :
- les moyens de soulèvement comportent au moins un tronçon de commande formant rampe destiné à coopérer avec une partie de la préforme couchée transversalement de manière à provoquer son soulèvement des rails jusqu'à une position haute d'éjection, dans laquelle ladite partie de la préforme est susceptible d'entrer en contact avec une partie de la roue pour être éjectée ;
- les moyens de soulèvement comportent, en aval du tronçon de commande formant rampe, un tronçon de maintien de manière à conserver après soulèvement la préforme dans sa position haute d'éjection ;
- les rails d'alimentation comportent au moins un tronçon de stabilisation des préformes, globalement rectiligne, qui est interposé longitudinalement entre les rouleaux d'alignement et la roue d'éjection ;
- la roue d'éjection est positionnée à une hauteur déterminée au-dessus des rails d'alimentation de manière à éjecter les préformes mal positionnées, sans entrer en contact avec les préformes correctement positionnées dans les rails ;
- l'axe de la roue d'éjection s'étend globalement dans un plan parallèle au plan des rails et de manière à former un angle compris entre 0° et 90°, notamment entre 20° et 75°, par rapport à la perpendiculaire à la direction longitudinale de défilement des préformes dans les rails d'alimentation ;
- la roue d'éjection comporte un arbre présentant en coupe selon un plan orthogonal à l'axe de rotation de la roue une section parallélépipédique ou triangulaire ;
- la roue d'éjection comporte des éléments radiaux souples, tels que des pales radiales, qui sont chacun solidaire de l'une des faces de l'arbre de la roue d'éjection ;
- le système comporte des moyens de récupération et/ou de recirculation, vers le dispositif de démêlage et d'alignement, des préformes mal positionnées ayant été éjectées.

D'autres caractéristiques et avantages de l'invention apparaîtront à la lecture de la description détaillée qui suit ainsi qu'au vu des dessins dans lesquels :
- la figure 1 représente schématiquement un exemple de préforme connue susceptible d'être utilisée dans un système d'alimentation conforme aux enseignements de l'invention ;
- la figure 2 est une vue schématique de côté d'un système d'alimentation de préformes selon un mode de réalisation préféré de l'invention et comportant des moyens d'éjection des préformes mal positionnées selon l'invention ;
- la figure 3 est une vue schématique partielle en perspective d'un système selon la figure 2 comportant une roue d'éjection qui est agencée conformément à l'invention en aval des rouleaux d'alignement et illustrant différentes configurations de préformes mal positionnées ;
- la figure 4 une vue schématique selon la figure 3 qui représente en coupe les rails d'alimentation convoyant les préformes et la roue d'éjection agencée au-dessus des rails ;
- la figure 5 est une vue de dessus des rails d'alimentation et de la roue d'éjection selon les figures 3 et 4.

Dans la description qui va suivre, des chiffres de référence identiques désignent des pièces identiques ou ayant des fonctions similaires.

Par convention, et à titre non limitatif, on utilisera les termes "aval" ou "amont" et les directions "longitudinale", "transversale" ou "verticale" pour désigner respectivement des éléments par rapport au sens de défilement des préformes ou des positions selon le trièdre (L, V, T) représenté notamment à la figure 2.

On a illustré sur la figure 2 de manière très schématique un système 20 d'alimentation de préformes selon un mode de réalisation préféré de l'invention. Un tel système 20 d'alimentation est par exemple destiné à alimenter une machine 22 de soufflage de préformes 10 telle que représentée à la figure 1.

Le système 20 d'alimentation comporte en amont un bac 24, ou trémie, de stockage dans lequel les préformes 10 sont stockées en vrac. Un élévateur 26 permet de prélever les préformes 10 dans le bac 24 de stockage pour les déverser à l'extrémité supérieure d'un dispositif 28 de démêlage et d'alignement. Dans ce dispositif 28, les préformes 10 sont orientées col 14 en haut et sont alignées en une file de manière à être ensuite délivrées en aval à des rails 30 d'alimentation qui transportent les préformes 10 vers une machine, telle qu'une machine 22 de soufflage.

Le système 20 comporte de préférence des moyens de récupération des préformes mal positionnées lors de l'opération d'orientation, qui sont éjectées. En effet les préformes n'étant pas détériorées au cours de cette opération peuvent avantageusement être réutilisées dans le système 20.

Les moyens de récupération sont par exemple constitués d'une trémie 32 de récupération dont l'extrémité inférieure communique avec un bac 34 de récupération dans lequel tombent les préformes 10 mal positionnées qui ont été éjectées.

En variante, les moyens de récupération comportent un tapis de recirculation qui permet de ramener les préformes éjectées jusqu'au bac 24 de stockage. Toutefois, si un tel tapis de recirculation permet d'automatiser le traitement des préformes éjectées, il présente le risque de réintroduire dans le système d'alimentation des préformes emboîtées, notamment de type couchées.

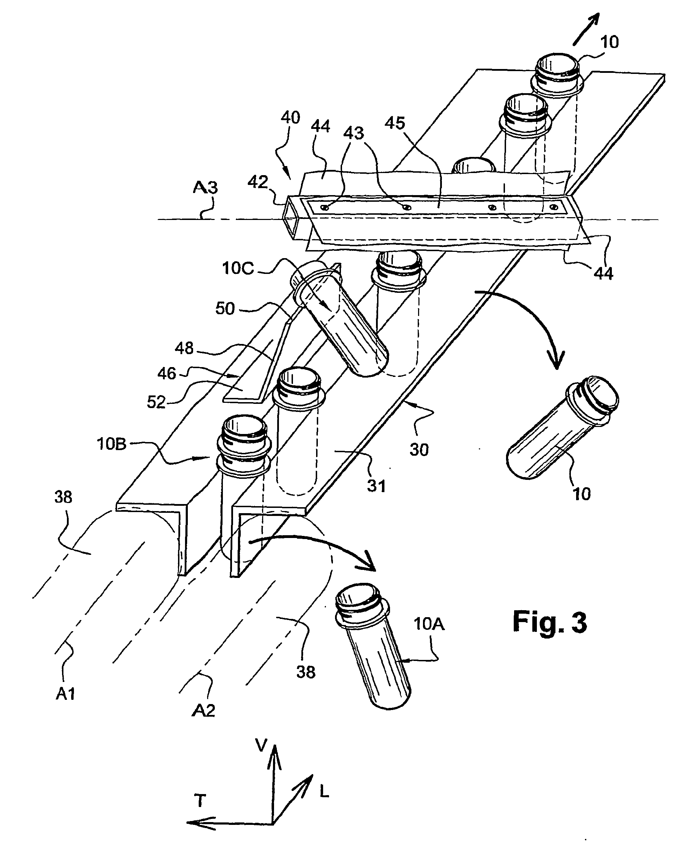

La figure 3 représente un système 20 d'alimentation du type comportant un dispositif 28 de démêlage et d'alignement, des rails 30 d'alimentation et des moyens d'éjection des préformes 10 mal positionnées conformes aux enseignements de l'invention.

De manière connue, le dispositif 28 de démêlage et d'alignement est composé d'un caisson comportant par exemple deux parois 36 latérales verticales. Le fond du caisson est formé par deux rouleaux 38, dits d'alignement, d'axes sensiblement parallèles A1 et A2 qui s'étendent sensiblement sur au moins une partie ou toute la longueur du caisson.

Les axes A1 et A2 sont inclinés par rapport à l'horizontale d'une pente correspondant à la pente d'inclinaison du dispositif de démêlage et d'alignement. Ces deux axes A1 et A2 peuvent être réglés de manière à présenter entre eux quelques minutes d'angle ou quelques degrés d'angle.

Comme on peut le voir sur la figure 3, les deux rouleaux 38 sont écartés l'un de l'autre de manière à laisser subsister entre eux un espace calibré dont la dimension transversale est légèrement supérieure au diamètre du corps 12 d'une préforme 10 du type de celle représentée à la figure 1.

Ainsi, le diamètre de la collerette 18 radiale externe du col 14 de la préforme 10 est supérieur à la dimension transversale de l'espace séparant les deux rouleaux 38. De la sorte, lorsqu'une préforme 10 se présente sur les rouleaux 38, son corps 12 peut plonger dans l'espace entre les deux rouleaux 38 mais elle se trouve alors retenue par la collerette 18 et respectivement alignée dans une position sensiblement verticale et orientée avec le col 14 en haut.

Pour favoriser le bon positionnement de la préforme 10, chaque rouleau 38 d'alignement est animé d'un mouvement de rotation autour de son axe respectif A1 ou A2. Les deux rouleaux 38 tournent en sens inverse l'un de l'autre, soit dans le sens indiqué sur les figures, soit chacun dans le sens contraire.

Pour s'assurer que toutes les préformes 10 déversées dans le dispositif 28 de démêlage et d'alignement viennent au contact des rouleaux 38 d'alignement, la partie inférieure des parois 36 latérales du caisson comporte avantageusement des pans inclinés de manière à ramener toutes les préformes 10 vers le centre du dispositif 28 de démêlage et d'alignement, sur les rouleaux 38.

Les préformes 10 sont en sortie des rouleaux 38 d'alignement le plus souvent correctement positionnées, c'est-à-dire qu'elles sont positionnées verticalement avec le col 14 en haut de manière que la collerette 18 coopère avec une partie des rails 30 d'alimentation.

Les préformes 10 sont ainsi positionnées en une file sensiblement continue de préformes afin d'être convoyées par les rails 30 d'alimentation vers la machine 22 de soufflage.

Conformément aux enseignements de l'invention, le système 20 d'alimentation comporte une roue 40 d'éjection qui est agencée en aval des rouleaux 38 d'alignement de manière à éjecter les préformes mal positionnées hors des rails d'alimentation.

Avantageusement, la roue 40 d'éjection est agencée en aval des rouleaux 38 de manière à éviter tout risque de refoulement accidentel d'une préforme mal positionnée vers les rouleaux 38 et à supprimer les incidents tels que des bourrages.

De préférence, la roue est agencée en aval à une distance déterminée de la sortie des rouleaux 38 de manière à agir sur une file sensiblement continue de préformes qui soient ordonnées et convoyées à une vitesse de défilement globalement constante et inférieure à la vitesse atteinte en sortie des rouleaux.

L'opération d'éjection est donc effectuée sur un flux de préformes ordonnées, contrairement à l'état de la technique où elle avait lieu au-dessus des rouleaux d'alignements dans lesquels les préformes se déplacent de manière désordonnée et chaotique jusqu'à ce qu'elles parviennent à se positionner correctement.

A cet effet, les rails 30 d'alimentation comportent avantageusement au moins un tronçon 31 dit de stabilisation qui est globalement rectiligne et interposé longitudinalement entre la sortie des rouleaux 38 et la roue 40 d'éjection de manière à stabiliser le flux des préformes issues des rouleaux en une file continue et ordonnée.

Ainsi, on supprime les risques d'interférence entre plusieurs préformes mal positionnées et on facilite de plus les réglages des paramètres de la roue 40 d'éjection, tels que sa vitesse de rotation, du fait que la vitesse de défilement des préformes dans les rails soit sensiblement constante.

La roue 40 d'éjection est agencée à une hauteur déterminée au-dessus des rails 30 d'alimentation et comporte pour l'essentiel un arbre 42 central dont l'axe A3 s'étend dans un plan parallèle au plan des rails 30 d'alimentation.

L'axe A3 est de préférence incliné par rapport à une perpendiculaire à la direction longitudinale de défilement des préformes suivant les rails 30. L'inclinaison de l'axe A3 forme un angle compris entre 0° et 90° par rapport à ladite perpendiculaire aux rails 30.

L'angle est ici de l'ordre de 45° mais, en fonction de la vitesse de défilement des préformes 10 dans les rails 30, c'est à dire en fonction de la géométrie et de la cadence d'alimentation du système, cet angle pourra varier et il est de préférence compris entre 20° et 75°.

L'arbre 42 est avantageusement relié à un système d'entraînement en rotation autour de son axe A3, tel qu'un moteur indépendant (non représenté).

Avantageusement, l'arbre 42 est constitué de manière simple et économique par un profilé métallique creux présentant en coupe selon un plan orthogonal à l'axe de rotation A3 une section carrée. La section de l'arbre 42 est plus généralement parallélépipédique et en variante triangulaire.

L'arbre 42 est muni d'éléments radiaux souples, tels que des pales 44 en forme de plaque qui sont en l'occurrence au nombre de quatre qui s'étendent radialement et sont réparties angulairement de manière régulière autour de l'axe A3, et qui sont par exemple réalisées en matière élastomère souple.

Les pales 44 s'étendent transversalement suivant l'axe A3 sur une largeur telle que, lorsque la roue 40 d'éjection est entraînée en rotation autour de son axe A3, elles balaient sensiblement toute la largeur ou encore tout l'espace transversal situé au-dessus des rails 30 d'alimentation formant une voie de cheminement des préformes 10.

Les pales 44 sont rapportées de manière solidaire sur les faces de l'arbre 42 s'étendant transversalement par exemple au moyen de vis 43 de fixation. De préférence, les têtes des vis 43 de fixation prennent appui sur une plaque 45 de protection et de positionnement des pales 44 sur l'arbre 42.

La roue 40 d'éjection ainsi réalisée est économique et les opérations de changement des pales 44 sont simples et rapides.

En variante, les pales pourraient être remplacées par des filaments radiaux souples, la roue 40 d'éjection prenant alors la forme d'une brosse rotative.

La trémie de récupération 32 comporte avantageusement dans sa partie supérieure, au voisinage de la roue 40 d'éjection, des parois (non représentées) qui s'étendent globalement verticalement ou sont inclinées vers la roue 40 de manière à capter les préformes mal positionnées qui sont notamment éjectées par la roue. La partie inférieure de la trémie 32 de récupération forme un guide d'évacuation des préformes éjectées jusqu'au bac 34 de récupération.

Le fonctionnement des moyens d'éjection des préformes mal positionnées sera mieux compris à la lecture de la description va suivre. A cet effet, on a représenté sur la figure 3, des préformes dans différentes configurations ou positions (identifiées par des lettres) correspondant aux principaux cas de préformes mal positionnées pouvant survenir dans un système 20 d'alimentation.

Selon une première configuration qu'illustre la préforme 10A, une telle préforme dite de type « couchée », seule ou emboîtée, qui parvient à la jonction de l'extrémité aval des rouleaux 38 d'alig nement et des rails 30 d'alimentation sans avoir pu être correctement positionnée par les rouleaux 38, va se trouver généralement déséquilibrée et chutée.

Ainsi, une telle préforme 10A tombe d'elle-même dans la trémie 32 de récupération prévue à cet effet puis dans le bac 34 sans aucune intervention extérieure.

Selon une deuxième configuration qu'illustre l'ensemble de préformes 10B, lorsque deux préformes 10 sont emboîtées verticalement l'une dans l'autre, c'est-à-dire du type emboîtées « debout », cet ensemble de préformes 10B est alors convoyé dans les rails 30 d'alimentation puisque la préforme inférieure est dans ce cas correctement positionnée.

Toutefois et ainsi qu'on l'aura compris, la préforme supérieure va néanmoins être éjectée par la roue 40 d'éjection lorsqu'elle parviendra en contact avec les pales 44 de la roue.

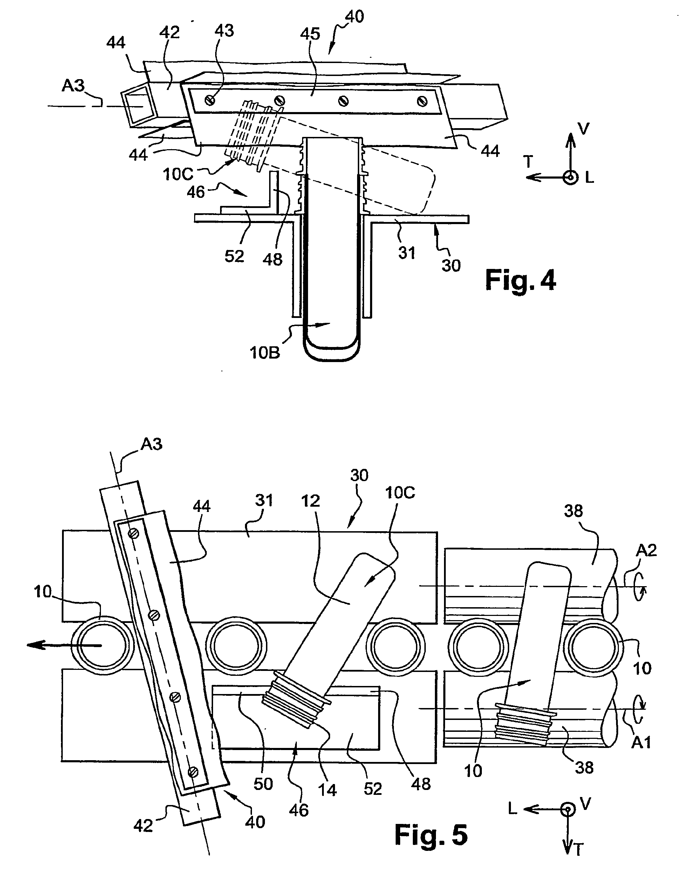

En effet, le positionnement vertical de la roue 40 et la dimension radiale des pales 44 sont choisis pour que la roue 40, entraînée en rotation autour de son axe A3, balaye l'espace situé immédiatement au-dessus des rails 30 sans venir au contact de préformes qui seraient correctement orientées entre les rails 30 d'alimentation. Plus précisément et comme on peut le voir sur la figure 4, seul le col 14 d'une préforme 10 correctement orientée passe sous la roue 40 d'éjection, sans être touchée par celle-ci.

Selon une troisième configuration qu'illustre la préforme 10C, il est possible que des préformes couchées, généralement non emboîtées, ne tombent pas à la sortie des rouleaux 38 mais trouvent au contraire une position d'équilibre dans laquelle elles s'étendent par exemple globalement transversalement en chevauchant les rails 30 d'alimentation.

II est notamment possible qu'une préforme se positionne dans la configuration décrite ci-dessus lorsqu'elle y est maintenue serrée par les cols 14 respectifs de deux préformes adjacentes correctement positionnées dans les rails 30 d'alimentation.

Des préformes 10 se trouvant dans cette troisième configuration peuvent ne pas être éjectées par la roue 40 d'éjection, voire dans certain cas se coincer ou passer sous la roue ce qui n'est pas acceptable pour les raisons détaillées précédemment.

C'est la raison pour laquelle, le système comporte conformément à l'invention des moyens 46 de soulèvement des préformes 10C mal positionnées de type couchées qui s'étendent notamment globalement transversalement par rapport aux rails 30, de manière à provoquer leur éjection par la roue 40 d'éjection.

Avantageusement, la roue 40 d'éjection est adjacente aux moyens 46 de soulèvement.

Les moyens 46 de soulèvement peuvent parfois entraîner un déséquilibre de la préforme 10C et en provoquer la chute hors des rails 30 d'alimentation.

Les moyens 46 de soulèvement comportent au moins un tronçon 48 de commande en forme de rampe inclinée qui est destiné à coopérer avec une partie de la préforme 10C couchée de manière à provoquer son soulèvement de sa position initiale couchée transversalement sur les rails 30 jusqu'à une position haute, dite d'éjection.

Plus précisément, lorsqu'une préforme parvient sur la rampe que forme le tronçon 48 de commande, celle-ci soulève une partie de la préforme 10 qui ne s'étend alors plus dans un plan parallèle au plan des rails 30.

Dès lors, qu'après avoir été soulevée, au moins une partie de la préforme 10C atteint cette position haute, cette partie tel que le col 14 va alors venir au contact des pales 44 de la roue 40 et sous l'action de celle-ci être éjectée hors des rails 30.

Avantageusement, l'axe transversal A3 de la roue 40 étant incliné par rapport aux rails qui s'étendent suivant la direction longitudinale de défilement, les moyens 46 de soulèvement sont agencés au voisinage de la partie de la roue 40 la plus amont, c'est-à-dire la plus proche des rouleaux 38.

Avantageusement, les moyens 46 de soulèvement comportent, en aval du tronçon 48 de commande formant rampe, un tronçon 50 de maintien globalement rectiligne de manière à conserver après soulèvement la préforme 10C dans sa position haute d'éjection.

Les moyens 46 de soulèvement sont donc de préférence disposés au moins en partie en amont de la roue 40 d'éjection.

Selon un exemple de réalisation possible illustré aux figures 3 à 5, les moyens 46 de soulèvement sont constitués par au moins une pièce 52 qui est solidaire de l'un des rails 30.

Plus précisément, la pièce 52 est ici une barre de profilé formant équerre qui présente en coupe transversale globalement la forme d'un « L » et qui s'étend ici longitudinalement et parallèlement à la face plane supérieure du rail 30 sur lequel elle est fixée.

Ainsi, toute préforme 10C couchée, notamment transversalement, va au contact du tronçon 48 de commande être soulevée en position haute puis y être maintenue par le tronçon 50 de maintien jusqu'à être éjectée dans la trémie 32 de récupération par la roue 40 d'éjection.

De préférence, le système 20 d'alimentation comporte des moyens 46 de soulèvement uniquement sur l'un des rails 30.

Les préformes 10C couchées sont donc extraites rapidement et efficacement des rails 30 d'alimentation par les moyens 46 de soulèvement de manière à éviter tout risque de bourrage en amont de la roue et/ou à supprimer tout risque de non éjection des préformes mal positionnées se trouvant dans cette configuration.

Bien entendu, on pourra prévoir un dispositif (non représenté) de réglage de la position verticale et/ou angulaire de la roue 40 d'éjection notamment par rapport aux rails 30 d'alimentation de manière à s'adapter à la géométrie des différents types de préformes.

De préférence, la roue 40 d'éjection et/ou les moyens 46 de soulèvement sont agencés dans un tronçon rectiligne des rails 30 d'alimentation, en aval du tronçon 31 de stabilisation.

Contrairement à l'état de la technique, la roue 40 d'éjection agencée en aval des rouleaux 38 d'alignement, permet d'éjecter les préformes mal orientées de manière fiable évitant tout risque de bourrage dans les rouleaux, notamment avec des alimentateurs à hautes cadences.

## Revendications

1. Système (20) d'alimentation de préformes, notamment destiné à alimenter des machines de soufflage de récipients tels que des bouteilles, du type comportant d'amont en aval selon la direction longitudinale de défilement des préformes (10), au moins un dispositif (28) de démêlage et d'alignement dont l'extrémité supérieure est approvisionnée en préformes (10) en vrac et dont l'extrémité inférieure comporte au moins deux rouleaux (38) d'alignement, sensiblement parallèles et entraînés en rotation autour de leur axe respectif (A1, A2), qui sont destinés à positionner les préformes (10) dans des rails (30) d'alimentation, inclinés par rapport à l'horizontale, pour les convoyer vers une machine (22), et du type comportant au moins une roue (40) d'éjection qui est agencée au-dessus des préformes (10) et entraînée en rotation autour d'un axe (A3) qui s'étend globalement transversalement, **caractérisé en ce que** la roue (40) d'éjection est agencée en aval des rouleaux (38) d'alignement de manière à éjecter des rails (30) d'alimentation les préformes (10) mal positionnées et **en ce qu'**il comporte des moyens (46) de soulèvement des préformes (10) mal positionnées de type couchées qui s'étendent notamment globalement transversalement par rapport aux rails (30) d'alimentation, de manière à provoquer leur éjection par la roue d'éjection (40) agencée en aval.

2. Système d'alimentation de préformes selon la revendication 1, **caractérisé en ce que** les moyens (46) de soulèvement comportent au moins un tronçon (48) de commande formant rampe destiné à coopérer avec une partie de la préforme (10) couchée transversalement de manière à provoquer son soulèvement des rails (30) jusqu'à une position haute d'éjection, dans laquelle ladite partie de la préforme (10) est susceptible d'entrer en contact avec une partie de la roue (40) pour être éjectée.

3. Système d'alimentation de préformes selon la revendication 2, **caractérisé en ce que** les moyens (46) de soulèvement comportent, en aval du tronçon (48) de commande formant rampe, un tronçon (50) de maintien de manière à conserver après soulèvement la préforme dans sa position haute d'éjection.

4. Système d'alimentation de préformes selon l'une quelconque des revendications précédentes, **caractérisé en ce que** les rails (30) d'alimentation comportent au moins un tronçon (31) de stabilisation des préformes, globalement rectiligne, qui est interposé longitudinalement entre les rouleaux (38) d'alignement et la roue (40) d'éjectio n.

5. Système d'alimentation de préformes selon l'une quelconque des revendications précédentes, **caractérisé en ce que** la roue (40) d'éjection est positionnée à une hauteur déterminée au-dessus des rails (30) d'alimentation de manière à éjecter les préformes (10) mal positionnées, sans entrer en contact avec les préformes correctement positionnées dans les rails.

6. Système d'alimentation de préformes selon l'une quelconque des revendications précédentes, **caractérisé en ce que** l'axe transversal (A3) de la roue (40) d'éjection s'étend globalement dans un plan parallèle au plan des rails (30) et de manière à former un angle compris entre 0° et 90°, notamment entre 20° et 75°, par rapport à la perpendiculaire à la direction longitudinale de défilement des préformes dans les rails (30) d'alimentation.

7. Système d'alimentation de préformes selon l'une quelconques des revendications précédentes, **caractérisé en ce que** la roue (40) d'éjection comporte un arbre (42) présentant en coupe selon un plan orthogonal à l'axe (A3) de rotation de la roue une section parallélépipédique ou triangulaire.

8. Système d'alimentation de préformes selon la revendication 7, **caractérisé en ce que** la roue (40) d'éjection comporte des éléments radiaux souples, tels que des pales (44) radiales, qui sont chacun solidaire de l'une des faces de l'arbre (42) de la roue (40) d'éjection.

9. Système d'alimentation de préformes selon l'une quelconque des revendications précédentes, **caractérisé en ce qu'**il comporte des moyens de récupération et/ou de recirculation, vers le dispositif (28) de démêlage et d'alignement, des préformes (10) mal positionnées ayant été éjectées.

## Claims

1. System (20) of feeding preforms, particularly designed to feed machines for blow moulding receptacles such as bottles, of the type comprising, from upstream to downstream in the longitudinal direction of travel of the preforms (10), at least one sorting and alignment device (28) whose top end is provided with preforms (10) in a jumble and whose bottom end comprises at least two alignment rollers (38), substantially parallel and rotated about their respective axis (A1, A2), that are designed to position the preforms (10) in feeding rails (30), inclined relative to the horizontal, to convey them to a machine (22), and of the type comprising at least one ejection wheel (40) that is arranged above the preforms (10) and rotated about an axis (A3) which extends generally transversely, **characterized in that** the ejection wheel (40) is arranged downstream of the alignment rollers (38) so as to eject the incorrectly positioned preforms (10) from the feeding rails (30) and **in that** it comprises means (46) of lifting the incorrectly positioned preforms (10) of the lying type that extend in particular generally transversely relative to the feeding rails (30), so as to cause them to be ejected by the ejection wheel (40) arranged downstream.

2. System of feeding preforms according to Claim 1, **characterized in that** the lifting means (46) comprise at least one control section (48) forming a ramp designed to interact with a part of the preform (10) lying transversely so as to cause it to be lifted from the rails (30) to a high position for ejection, in which the said part of the preform (10) is capable of entering into contact with a part of the wheel (40) to be ejected.

3. System of feeding preforms according to Claim 2, **characterized in that** the lifting means (46) comprise, downstream of the control section (48) forming a ramp, a retention section (50) in order to retain the preform, after lifting, in its high position for ejection.

4. System of feeding preforms according to any one of the preceding claims, **characterized in that** the feeding rails (30) comprise at least one preform stabilization section (31), generally rectilinear, that is interposed longitudinally between the alignment rollers (38) and the ejection wheel (40).

5. System of feeding preforms according to any one of the preceding claims, **characterized in that** the ejection wheel (40) is positioned at a determined height above the feeding rails (30) so as to eject the incorrectly positioned preforms (10) without entering into contact with the preforms correctly positioned in the rails.

6. System of feeding preforms according to any one of the preceding claims, **characterized in that** the transverse axis (A3) of the ejection wheel (40) extends generally in a plane parallel to the plane of the rails (30) and so as to form an angle lying between 0° and 90°, particularly between 20° and 75°, relative to the perpendicular to the longitudinal direction of travel of the preforms in the feeding rails (30).

7. System of feeding preforms according to any one of the preceding claims, **characterized in that** the ejection wheel (40) comprises a shaft (42) having, in section along a plane orthogonal to the axis (A3) of rotation of the wheel, a parallelepipedic or triangular section.

8. System of feeding preforms according to Claim 7, **characterized in that** the ejection wheel (40) comprises flexible radial elements, such as radial paddles (44), that are each fixedly attached to one of the faces of the shaft (42) of the ejection wheel (40).

9. System of feeding preforms according to any one of the preceding claims, **characterized in that** it comprises means of recovering and/or recirculating, to the sorting and alignment device (28), the incorrectly positioned preforms (10) that have been ejected.

## Patentansprüche

1. Zuführsystem (20) für Vorformlinge, insbesondere zum Bestücken von Blasformmaschinen für Behälter, wie beispielsweise Flaschen, der Art, welches entsprechend der Längsrichtung des Durchlaufs von Vorformlingen (10) von vorne nach hinten wenigstens eine Vorrichtung (28) zum Geradelegen und Ausrichten aufweist, an deren oberen Ende Vorformlinge (10) in loser Schüttung vorhanden sind und deren unteres Ende wenigstens zwei Walzen (38) zum Ausrichten aufweist, die im Wesentlichen parallel sind und um ihre jeweilige Achse (A1, A2) drehend angetrieben sind und dazu dienen, die Vorformlinge (10) in Zuführschienen (30), die bezogen auf die Waagerechte geneigt sind, zu positionieren, um diese zu einer Maschine (22) zu befördern, und der Art, welches wenigstens ein Rad (40) zum Ausstoßen aufweist, das oberhalb der Vorformlinge (10) angeordnet ist und um seine Achse (A3), die sich im Wesentlichen in Querrichtung erstreckt, drehend angetrieben ist, **dadurch gekennzeichnet, dass** das Rad (40) zum Ausstoßen hinter den Rollen (38) zum Ausrichten angeordnet ist, um aus den Zuführschienen (30) die schlecht positionierten Vorformlinge (10) auszustoßen, und dadurch, dass es Mittel (46) zum Anheben schlecht positionierter Vorformlinge (10), insbesondere liegender, die sich insbesondere im Wesentlichen quer zu den Zuführschienen (30) erstrecken, aufweist, um deren Ausstoßen durch das Rad zum Ausstoßen (40), das in Durchlaufrichtung hinten angeordnet ist, herbeizuführen.

2. Zuführsystem für Vorformlinge gemäß Anspruch 1, **dadurch gekennzeichnet, dass** die Mittel (46) zum Anheben wenigstens ein Steuerteilstück (48) aufweisen, das eine Rampe bildet und dazu dient, mit einem Teil des Vorformlings (10) zusammenzuwirken, der quer liegt, um dessen Anheben aus den Schienen (30) bis zu einer hohen Ausstoßposition zu bewirken, in welcher der Teil des Vorformlings (10) in Kontakt mit einem Teil des Rads (40) treten kann, um ausgestoßen zu werden.

3. Zuführsystem für Vorformlinge gemäß Anspruch 2, **dadurch gekennzeichnet, dass** die Mittel (46) zum Anheben hinter dem Steuerteilstück (48), das eine Rampe bildet, ein Halteteilstück (50) aufweisen, um den Vorformling nach Anheben in seiner hohen Ausstoßposition zu halten.

4. Zuführsystem für Vorformlinge gemäß einem der vorausgegangenen Ansprüche, **dadurch gekennzeichnet, dass** die Zuführschienen (30) wenigstens ein Teilstück (31) zur Stabilisierung der Vorformlinge aufweisen, das im Wesentlichen gerade ist und in Längsrichtung zwischen die Rollen (38) zum Ausrichten und das Rad (40) zum Ausstoßen zwischengesetzt ist.

5. Zuführsystem für Vorformlinge gemäß einem der vorausgegangenen Ansprüche, **dadurch gekennzeichnet, dass** das Rad (40) zum Ausstoßen bei einer bestimmten Höhe oberhalb der Zuführschienen (30) angeordnet ist, um die schlecht positionierten Vorformlinge (10) auszustoßen, ohne mit den in den Schienen korrekt positionierten Vorformlingen in Kontakt zu kommen.

6. Zuführsystem für Vorformlinge gemäß einem der vorausgegangenen Ansprüche, **dadurch gekennzeichnet, dass** sich die Querachse (A3) des Rads (40) zum Ausstoßen im Wesentlichen in einer Ebene parallel zur Ebene der Schienen (30) erstreckt und derart, dass ein Winkel zwischen 0° und 90°, insbesondere zwischen 20° und 75°, bezogen auf die Senkrechte zur Längsrichtung des Durchlaufens der Vorformlinge in den Zuführschienen (30) gebildet wird.

7. Zuführsystem für Vorformlinge gemäß einem der vorausgegangenen Ansprüche, **dadurch gekennzeichnet, dass** das Rad (40) zum Ausstoßen eine Welle (42) umfasst, welche im Schnitt entlang einer zur Rotationsachse (A3) des Rads orthogonalen Ebene einen parallelepipedförmigen oder dreieckigen Querschnitt aufweist.

8. Zuführsystem für Vorformlinge gemäß Anspruch 7, **dadurch gekennzeichnet, dass** das Rad (40) zum Ausstoßen weiche radiale Elemente, wie beispielsweise radiale Blätter (44) aufweist, die jeweils mit einer der Seiten der Welle (42) des Rads (40) zum Ausstoßen fest zusammengebaut sind.

9. Zuführsystem für Vorformlinge gemäß einem der vorausgegangenen Ansprüche, **dadurch gekennzeichnet, dass** es Mittel zum Wiedernutzbarmachen und/oder Zurückbringen in den Kreislauf zu der Vorrichtung (28) zum Geradelegen und Ausrichten für die schlecht positionierten Vorformlinge (10), die ausgestoßen wurden, aufweist.
